# DEMANDE DE BREVET EUROPEEN

(11) **EP 1 372 327 A1**
(43) Date de publication de la demande: **17.12.2003**
(21) Numéro de dépôt: 03013035.5
(22) Date de dépôt: 10.06.2003
(51) Int. Cl.: H04M 3/493, H04M 1/2745, H04Q 7/32, H04M 1/737

(54) **Système et procédé de transfert d'informations entre des équipements de télécommunications**

(30) Priorité: 12.06.2002 FR 0207232
(71) Demandeur: FRANCE TELECOM, 75015 Paris (FR)
(72) Inventeur: Morel, Thierry, 14210 Tourville/Odon (FR); Picquenot, David, 14280 St Contest (FR); Roberge, Marc-Antoine, 14760 Bretteville/Odon (FR)

(57) **Abrégé**

L'invention concerne un système de transfert d'informations dans lequel un second équipement de télécommunications (2 ;2' ;2"), qui contient au moins un répertoire d'au moins une donnée d'accès à une personne ou un service, comprend :
- des moyens de traitement (2a, 2b ; S', 2'b ; S", 2"b) d'au moins une requête (4 ;7' ;7") émise en provenance d'un premier équipement de télécommunications (1 ;1' ;1"), par l'intermédiaire d'un moyen de transfert d'informations (3,3a ; 3'M,3'a,3'F,3'b,P' ; 3", I"₁, I"₂) reliant les premier et second équipements de télécommunications, ladite requête consistant en une demande de transfert du répertoire sur ledit premier équipement,
- des moyens de gestion de données (2c ;2'c ;2"c) contenant au moins le répertoire demandé et reliée auxdits moyens de traitement, de telle sorte que suite à la réception de ladite requête dans les moyens de traitement, ces derniers extraient des moyens de gestion de données le répertoire demandé et transforme ce dernier en une suite de messages (5 ;5' ;5") aptes à être envoyés audit premier équipement par l'intermédiaire dudit moyen de transfert d'informations, lesdits messages reçus dans ledit premier équipement en provenance dudit second équipement étant alors enregistrés dans une mémoire (M ; M' ; M") contenue dans un module d'authentification d'abonné (1a ;1'a ;1"a) du premier équipement (1 ;1' ;1").
L'invention concerne également un procédé de transfert d'informations destiné à être mis en oeuvre notamment dans ce système.

## Description

La présente invention concerne un système de transfert d'informations.

Plus particulièrement, l'invention concerne un système de transfert d'informations comprenant :
- un premier équipement de télécommunications qui comprend des moyens de stockage de données,
- un second équipement de télécommunications qui contient au moins un répertoire d'au moins une donnée d'accès à une personne ou un service et qui est relié au premier équipement de télécommunications par un moyen de transfert d'informations, de telle sorte que ledit répertoire de données soit susceptible d'être transféré sur le premier équipement de télécommunications.

A l'heure actuelle, la plupart des équipements de télécommunications, en particulier les téléphones mobiles et fixes, contiennent un tel répertoire de données, notamment un répertoire téléphonique.

L'utilisateur de tels téléphones a alors la possibilité de gérer sur ces derniers les noms et numéros de téléphone associés de ses correspondants favoris. A cet effet, le répertoire téléphonique est accessible via un menu programmé préalablement par l'opérateur ou le fournisseur du téléphone. Lorsque l'utilisateur désire contacter un correspondant favori, il sélectionne son correspondant sur l'écran de son téléphone, puis déclenche l'appel par simple pression d'une touche du clavier. Ainsi, l'utilisateur n'a pas à taper le numéro de téléphone complet de son correspondant, ce qui lui facilite grandement la tâche.

Dans le cas de nombreux téléphones fixes ou mobiles, l'utilisateur a même la possibilité d'ajouter automatiquement à son répertoire le numéro des personnes qui l'appellent.

Lorsqu'il s'agit d'un équipement de télécommunications mobile, tel que par exemple un téléphone mobile GSM, l'utilisateur a la possibilité de stocker le répertoire téléphonique :
- soit sur la carte SIM (Subscriber ldentity Module) du téléphone,
- soit sur une mémoire permanente du téléphone.

L'avantage du stockage du répertoire sur la carte SIM réside dans le fait que lorsque l'utilisateur change d'équipement de télécommunications, il se contente d'introduire la carte SIM dans le nouvel équipement. Ainsi l'utilisateur s'affranchit d'une nouvelle saisie du répertoire, longue et fastidieuse.

Pour certains terminaux, il y a un avantage à stocker le répertoire sur la mémoire permanente du téléphone car cela permet de pouvoir associer plusieurs numéros de téléphone à un nom et donc d'avoir une meilleure ergonomie lors de la phase de recherche du correspondant dans le répertoire. Mais une telle fonctionnalité n'est pas prévue dans la norme qui spécifie les fonctionnalités des cartes SIM actuelles.

La plupart des terminaux récents du réseau fixe offrent également une fonction de répertoire téléphonique. Un tel répertoire est stocké dans une mémoire permanente qui est contenue dans le terminal fixe.

Le problème que l'utilisateur rencontre actuellement est de pouvoir, de façon ergonomique, consulter un répertoire téléphonique contenu sur un premier équipement de télécommunications, notamment un téléphone mobile, à partir d'un second équipement de télécommunications, tel que par exemple un téléphone fixe classique. Dans un tel cas,
- soit l'utilisateur est obligé de consulter physiquement et au coup par coup le répertoire de son téléphone mobile avant de passer son appel depuis son téléphone fixe,
- soit l'utilisateur s'astreint à une recopie manuelle du répertoire de son téléphone mobile sur le répertoire de son téléphone fixe.

L'inconvénient de telles procédures réside dans le fait que, d'une part, elles sont fastidieuses, et, que, d'autre part, elles nécessitent d'avoir, à portée de main, le téléphone mobile contenant le répertoire que l'on souhaite consulter.

Il existe par ailleurs dans l'état de la technique, un système de transfert d'informations du type cité plus haut, dans lequel des premier et second équipements de télécommunications échangent des informations de type fichier de données. Cet échange d'informations est rendu possible grâce à un réseau de télécommunications fixe, mobile ou Internet, ou bien encore grâce à une liaison filaire, infrarouge ou Bluetooth.

Dans un exemple d'un tel système :
- le premier équipement de télécommunications est un ordinateur personnel,
- le second équipement de télécommunications est un téléphone mobile,
- et le fichier de données est un répertoire téléphonique stocké dans une mémoire de l'ordinateur.

L'utilisateur de ce système a alors la faculté de télécharger le répertoire téléphonique dans une mémoire de son téléphone mobile.

L'inconvénient d'un tel système réside là encore dans le fait que la fourniture préalable du répertoire à l'ordinateur oblige l'utilisateur à saisir manuellement toutes les données du répertoire, ce qui est long et fastidieux.

La présente invention a pour but de remédier aux inconvénients précités.

A cet effet, le système selon l'invention est caractérisé en ce que le second équipement de télécommunications comprend :
- des moyens de traitement d'au moins une requête émise en provenance du premier équipement de télécommunications, par l'intermédiaire dudit moyen de transfert d'informations, ladite requête consistant en une demande de transfert dudit répertoire sur le premier équipement de télécommunications ,
- des moyens de gestion de données contenant au moins le répertoire demandé et reliés auxdits moyens de traitement, de telle sorte que suite à la réception de ladite requête dans les moyens de traitement, ces derniers extraient des moyens de gestion de données le répertoire demandé et transforme ce dernier en une suite de messages aptes à être envoyés au premier équipement de télécommunications par l'intermédiaire dudit moyen de transfert d'informations, les données du répertoire contenues dans les messages reçus en provenance du second équipement de télécommunications étant alors enregistrées dans les moyens de stockage de données.

Grâce à cette disposition, l'utilisateur a ainsi la faculté de récupérer facilement et rapidement, sur le premier équipement de télécommunications, le fichier de données d'accès contenu dans le second équipement de télécommunications.

Un tel système s'avère particulièrement avantageux avec la multiplication des techniques de communication et des adresses associées (numéros de téléphone, adresse postale, e-mail, URL...) qui conduit à une augmentation de la taille des répertoires.

Dans des modes de réalisation préférés du système selon l'invention, on a recours à l'une et/ou à l'autre des dispositions suivantes :
- les moyens de stockage de données sont contenus dans un module électronique d'authentification d'un utilisateur du premier équipement de télécommunications,
- le second équipement de télécommunications comprend en outre des moyens d'émission d'une requête en direction du premier équipement de télécommunications, par l'intermédiaire du moyen de transfert d'informations, ladite requête consistant en une proposition de transfert du répertoire sur le premier équipement de télécommunications,
- la donnée d'accès du répertoire est choisie dans le groupe comprenant un numéro de téléphone, une adresse postale, une adresse de messagerie électronique, une adresse URL,
- les premier et second équipements de télécommunications sont choisis dans le groupe comprenant les téléphones mobiles, les téléphones fixes, les assistants personnels numériques, les ordinateurs personnels, et les serveurs,
- lorsque le second équipement de télécommunications est un serveur, les moyens de traitement de requête comprennent un serveur d'applications,
- lorsque le second équipement de télécommunications est un téléphone mobile, les moyens de traitement de requête comprennent un module électronique d'authentification d'un utilisateur du téléphone mobile,
- le moyen de transfert est choisi dans le groupe comprenant un réseau de télécommunications mobile, fixe et Internet,
- une requête ou un message est du type SMS,
- le moyen de transfert est une liaison infrarouge,
- une requête ou un message est du type IrDA,

La présente invention concerne également un procédé de transfert d'un répertoire d'au moins une donnée d'accès à une personne ou un service dans un premier équipement de télécommunications comprenant des moyens de stockage de données, ledit répertoire étant contenu dans un second équipement de télécommunications qui est relié au premier équipement de télécommunications par un moyen de transfert d'informations.

Un tel procédé de transfert est destiné à être mis en oeuvre notamment dans le système selon l'invention.

A cet effet, le procédé selon l'invention est caractérisé en ce qu'il comprend au moins les étapes suivantes :
- a) le premier équipement de télécommunications envoie, par l'intermédiaire du moyen de transfert d'informations, une requête au second équipement de télécommunications selon laquelle est demandé un transfert du répertoire,
- b) suite à la réception de cette requête, des moyens de traitement contenus dans le second équipement de télécommunications extraient le répertoire demandé à partir de moyens de gestion de données contenus dans le second équipement de télécommunications, et transforment ce répertoire en une suite de messages aptes à être envoyés au premier équipement de télécommunications par l'intermédiaire du moyen de transfert d'informations,
-c) le second équipement de télécommunications envoie les messages en direction du premier équipement de télécommunications,
- d) le premier équipement de télécommunications enregistre, dans les moyens de stockage de données, les données du répertoire contenues dans les messages reçus.

Dans des modes de réalisation préférés du procédé selon l'invention, on a recours à l'une et/ou à l'autre des dispositions suivantes :
- préalablement à l'étape a), le second équipement de télécommunications envoie en direction du premier équipement de télécommunications, par l'intermédiaire du moyen de transfert d'informations, une requête selon laquelle est proposé un transfert dudit répertoire sur le premier équipement de télécommunications,
- la donnée d'accès du répertoire est choisie dans le groupe comprenant un numéro de téléphone, une adresse postale, une adresse de messagerie électronique, une adresse URL,
- le moyen de transfert est choisi dans le groupe comprenant un réseau de télécommunications mobile, mobile et fixe, et Internet,
- une requête ou un message est du type SMS,
- le moyen de transfert est une liaison infrarouge,
- une requête ou un message est du type IrDA.

D'autres caractéristiques et avantages de l'invention apparaîtront au cours de la description suivante de trois de ses modes de réalisation, donnés à titre d'exemple non limitatif, en regard des dessins annexés.

Sur les dessins :
- la figure 1A représente un système de transfert d'informations de la présente invention, selon un premier mode de réalisation,
- la figure 1 B représente un diagramme d'état d'un procédé de transfert d'informations mis en oeuvre dans le système de la figure 1A,
- la figure 2A représente un système de transfert d'informations de la présente invention, selon un second mode de réalisation,
- la figure 2B représente un diagramme d'état d'un procédé de transfert d'informations mis en oeuvre dans le système de la figure 2A,
- la figure 3A représente un système de transfert d'informations de la présente invention, selon un troisième mode de réalisation,
- la figure 3B représente un diagramme d'état d'un procédé de transfert d'informations mis en oeuvre dans le système de la figure 3A.

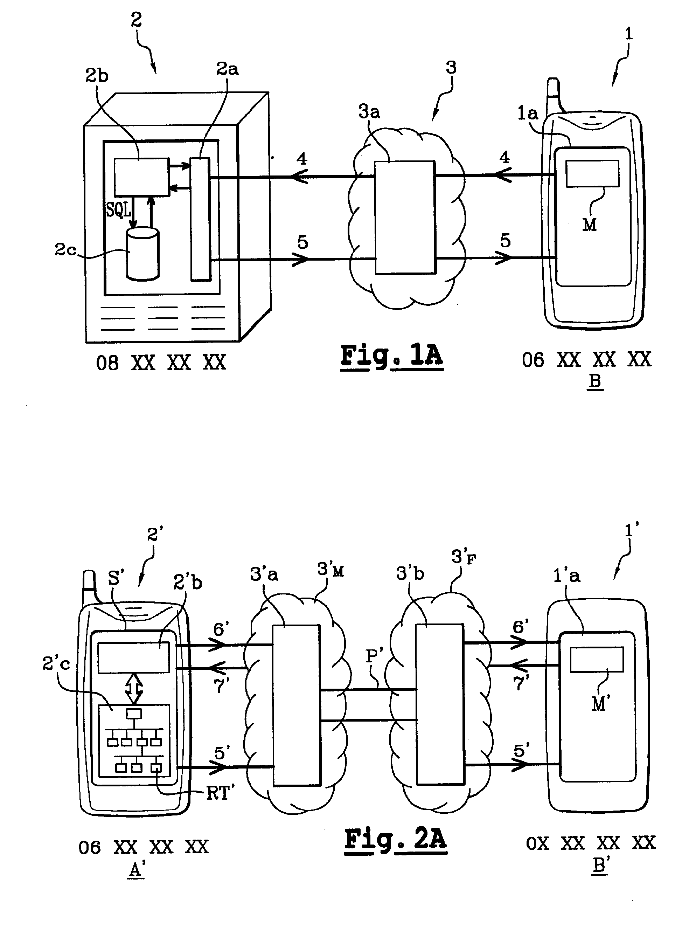

On va maintenant décrire, en référence à la figure 1A, un système de transfert d'informations selon un premier mode de réalisation.

Comme on peut le voir sur la figure 1A, le système selon la présente invention comprend :
- un premier équipement de télécommunications 1,
- un second équipement de télécommunications 2,
- et un moyen de transfert d'informations 3.

Dans l'exemple représenté :
- le premier équipement de télécommunications 1 est un téléphone mobile classique, par exemple de type GSM, qui comprend une mémoire M contenue, de préférence, dans un module électronique d'authentification (ex: carte SIM) d'un abonné B à un réseau mobile, utilisateur du téléphone mobile 1,
- le second équipement de télécommunications 2 est un serveur ;
- et le moyen de transfert d'informations 3 est un réseau de télécommunications mobile, par exemple du type GSM, comprenant une centrale de messages SMS (« Short Message ») 3a qui est destinée, de façon connue en soi, à gérer le réception et l'envoi de messages SMS.

Le serveur 2, auprès duquel s'est préalablement inscrit l'abonné B, utilisateur du téléphone mobile 1, comporte :
- une interface SMS 2a avec l'opérateur du réseau GSM 3,
- un serveur d'applications 2b relié à l'interface 2a et destiné à traiter les requêtes SMS en provenance du téléphone mobile 1,
- une base de données 2c reliée au serveur 2b et contenant au moins un fichier de données d'accès à une personne ou un service, tel qu'en particulier un répertoire téléphonique classique.

Un tel répertoire peut comporter, en plus des numéros de correspondants et des adresses postales associées, des listes d'adresses stockées sous format électronique (adresses de messagerie électronique, adresse URL, etc...) et qui permettent l'accès à des équipements de télécommunications tels que par exemple des serveurs d'informations ou de diffusion de contenu multimédia.

Un tel répertoire est par exemple destiné à être partagé entre plusieurs personnes, dont notamment l'utilisateur B. Il consiste notamment en un annuaire interne à une entreprise, une base clientèle, ou encore un annuaire de membres d'une communauté d'intérêt.

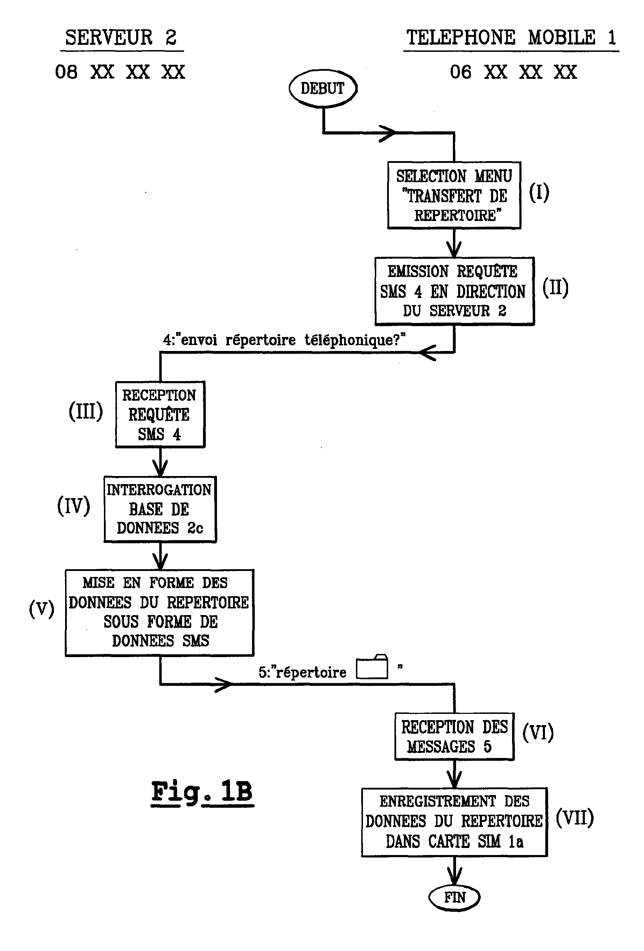

On va maintenant décrire, en référence aux figures 1A et 1B, le fonctionnement du système décrit ci-dessus.

L'utilisateur B sélectionne sur le téléphone mobile 1 le menu intitulé « transfert de répertoire » (étape I). Un tel menu a été programmé préalablement dans la carte SIM 1a du téléphone mobile 1.

Une telle sélection entraîne la composition automatique du numéro d'accès 08 xx xx xx du serveur 2 et l'envoi (étape II), par la carte SIM 1a, d'une requête demandant au serveur 2 le téléchargement du répertoire sur le téléphone mobile 1.

Dans l'exemple représenté, ladite requête se présente sous la forme d'un message court SMS, 4, intitulé par exemple : « envoi répertoire téléphonique ? ». Une telle requête 4 contient, de façon connue en tant que telle, le numéro d'identification MSISDN de l'utilisateur B.

La requête 4 est reçue (étape III) par l'interface SMS 2a après avoir transité dans la centrale de messages SMS 3a.

L'interface SMS 2a transmet la requête 4 au serveur d'applications 2b qui comporte un programme conçu pour permettre, suite à la réception de la requête 4, la vérification que l'utilisateur B est autorisé à recevoir le répertoire.

D'une façon connue en tant que telle, une telle vérification consiste à comparer si le numéro d'identification MSISDN contenu dans le message 4 est le même que le numéro d'identification MSISDN préalablement enregistré dans la base de données 2c du serveur 2 au moment de l'inscription de l'utilisateur B au serveur 2.

Si la vérification s'avère exacte, le serveur d'applications 2c adresse (étape IV) à la base de données 2c une requête, par exemple de type SQL (figure 1A), selon laquelle est demandé le répertoire correspondant au numéro d'identification MSISDN contenu dans le message 4.

La base de données 2c envoie en réponse au serveur d'applications 2b les données du répertoire correspondant, s'il existe.

Le serveur d'applications 2b procède alors à une mise en forme des données du répertoire à envoyer sous forme de données SMS (étape V). Dans l'exemple représenté, les données du répertoire sont regroupées en blocs TLV (type longueur valeur) de 140 octets, chaque bloc comportant une en-tête spécifiant le numéro d'identification MSISDN de l'utilisateur B, le numéro du message SMS et le nombre de messages à recevoir.

Le serveur d'applications 2b envoie ces blocs de données à l'interface SMS 2a qui les transmet alors au téléphone mobile 1, sous la forme d'une pluralité de messages SMS 5 correspondants, intitulés par exemple « répertoire ».

Les messages SMS 5 sont reçus successivement dans le téléphone mobile 1 (étape VI) après avoir transité dans la centrale de messages SMS 3a.

La carte SIM 1a traite les messages SMS 5 au fur et à mesure de leur arrivée pour extraire de ces messages les données du répertoire et aller stocker ces dernières dans la mémoire M de la carte SIM 1a (étape VII). Les données déjà existantes en mémoire sont alors écrasées.

On va maintenant décrire, en référence à la figure 2A, un second mode de réalisation de l'invention.

Ce second mode de réalisation se distingue du premier mode de réalisation ci-dessus en ce qu'il comprend :
- un premier équipement de télécommunications 1' qui est, dans l'exemple représenté, un téléphone fixe standard 1' au lieu d'un téléphone mobile 1, ledit téléphone fixe 1' comprenant une mémoire M' qui est contenue, de préférence, dans une carte électronique programmable 1'a d'un type analogue à la carte SIM 1a du téléphone mobile 1,
- un second équipement de télécommunications 2', qui est, dans l'exemple représenté, un téléphone mobile classique, par exemple de type GSM, au lieu d'un serveur 2, le téléphone 2' comportant un module électronique d'authentification S' (carte SIM) d'un abonné A' à un réseau mobile, utilisateur du téléphone mobile 2',
- et un moyen de transfert d'informations 3' qui est, dans l'exemple représenté, un réseau de télécommunications mobile 3'_{M}, par exemple de type GSM, relié à un réseau de télécommunications fixe 3'_{F}, par exemple du type RTC.

La liaison entre ces deux réseaux est effectuée par une passerelle P' reliant une centrale de messages SMS 3'a du réseau de télécommunications mobile 3'_{M} à une centrale de messages SMS 3'b du réseau de télécommunications fixe 3'_{F}.

Dans l'exemple représenté, la carte SIM S' du téléphone mobile 2' offre une interface d'accès 2'b à un fichier de données 2'c comportant notamment un sous-fichier RT' de données d'accès à une personne ou un service, tel qu'en particulier un répertoire téléphonique classique.

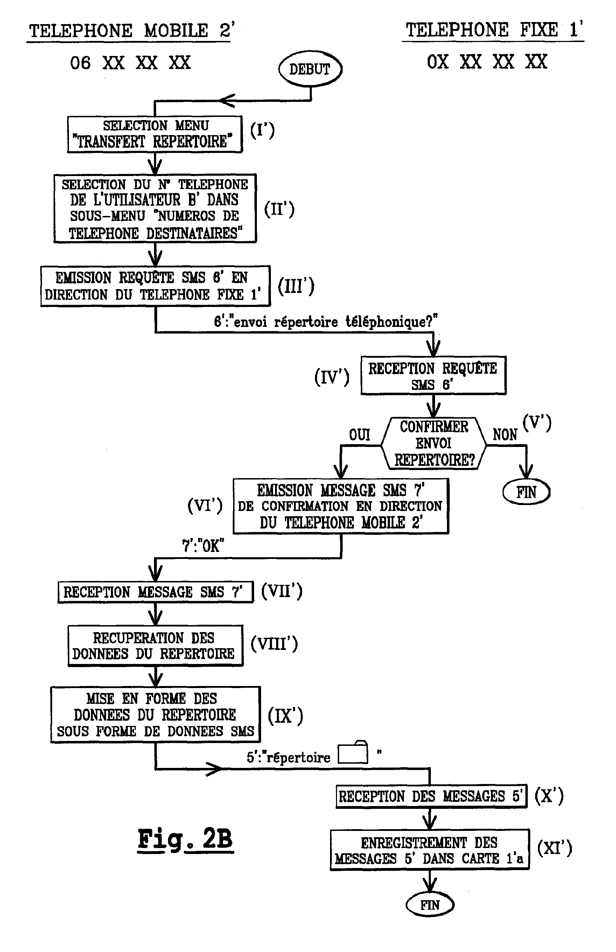

On va maintenant décrire, en référence aux figures 2A et 2B, le fonctionnement du système décrit ci-dessus.

L'utilisateur A' sélectionne sur le téléphone mobile 2' le menu intitulé « transfert de répertoire » (étape l'). Un tel menu a été programmé préalablement dans la carte SIM S' du téléphone mobile 2'.

Suite à cette sélection, un sous-menu intitulé « numéros de téléphone destinataires » s'affiche à l'écran.

L'utilisateur A' sélectionne le numéro de téléphone souhaité (étape II'), à savoir le numéro d'abonné d'un utilisateur B', détenteur du téléphone fixe 1'.

Une telle sélection entraîne la composition automatique du numéro d'abonné 0x xx xx xx de l'utilisateur B' et l'envoi (étape III'), par la carte SIM S',d'une requête demandant à l'utilisateur B' s'il souhaite télécharger un répertoire sur le téléphone fixe 1'.

Dans l'exemple représenté, ladite requête se présente sous la forme d'un message court SMS, 6', intitulé par exemple :« envoi répertoire téléphonique ? ». Une telle requête 6' contient, de façon connue en tant que telle, le numéro d'identification MSISDN de l'utilisateur A'.

La requête 6' est reçue (étape IV') par la carte électronique 1'a du téléphone fixe 1' après avoir transité dans la centrale de messages SMS 3'a, puis dans la centrale de messages SMS 3'b.

Suite à l'affichage à l'écran du message SMS 6', l'utilisateur B' choisit de télécharger ou non ce répertoire (étape V').

Dans le cas où le téléchargement du répertoire sur le téléphone fixe 1' n'est pas souhaité, l'utilisateur B' efface simplement le message 6' et le procédé de transfert n'a pas lieu.

Dans le cas où le téléchargement du répertoire sur le téléphone fixe 1' est souhaité, l'utilisateur B' envoie un message 7' à l'utilisateur A' lui confirmant le téléchargement du répertoire (étape VI').

Dans l'exemple représenté, le message 7' est un message court SMS émis par la carte électronique 1'a, ledit message étant intitulé par exemple : « OK ».

Un tel message 7' contient, de façon connue en tant que telle, le numéro d'identification de l'utilisateur B'.

Le message 7' est reçu (étape VII') par la carte SIM S' du téléphone mobile 2' après avoir transité dans la centrale de messages SMS 3'b, puis la centrale de messages 3'a.

Suite à la réception du message 7', la carte SIM S' vérifie que l'utilisateur B' est autorisé à recevoir le répertoire.

D'une façon connue en tant que telle, une telle vérification consiste à comparer si le numéro d'identification contenu dans le message 7' est le même que le numéro d'abonné 0x xx xx xx de l'utilisateur B' composé initialement par l'utilisateur A' à l'étape II'.

Si la vérification s'avère exacte, la carte SIM S' récupère les données du sous-fichier répertoire RT', par l'intermédiaire de l'interface d'accès 2'b.

Simultanément, la carte SIM S' procède à une mise en forme des données du répertoire et à leur envoi sous forme de données SMS (étape IX'). Dans l'exemple représenté, les données du répertoire sont regroupées en blocs TLV (type longueur valeur) de 140 octets, chaque bloc comportant une en-tête spécifiant le numéro d'identification de l'utilisateur B', le numéro du message SMS et le nombre de messages à recevoir.

La carte SIM S' du téléphone mobile 2' envoie ces blocs de données au téléphone fixe 1', sous la forme d'une pluralité de messages SMS 5' correspondants, intitulés par exemple « répertoire ».

Les messages SMS 5' sont reçus successivement dans le téléphone fixe 1' (étape X') après avoir transité dans la centrale de messages SMS 3'a, puis dans la centrale de messages 3'b.

La carte électronique 1'a traite les messages SMS 5' au fur et à mesure de leur arrivée pour extraire de ces messages les données du répertoire et aller stocker ces dernières dans la mémoire M' de la carte 1'a (étape XI'). Les données déjà existantes en mémoire sont alors écrasées.

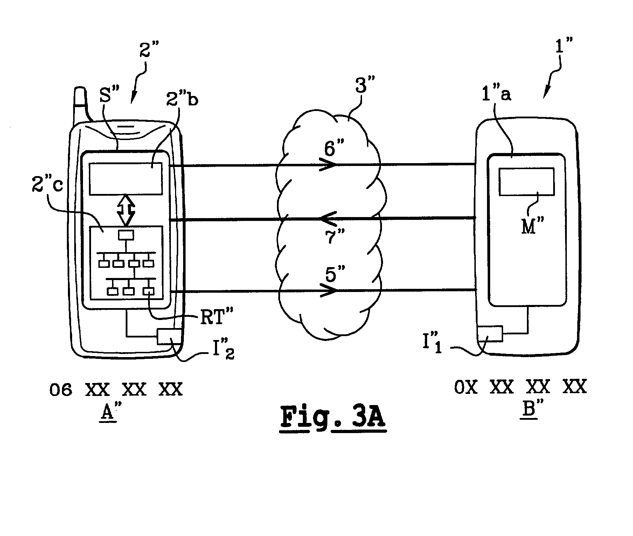

On va maintenant décrire, en référence à la figure 3A, un troisième mode de réalisation de l'invention.

Le système, selon ce troisième mode de réalisation, comprend :
- un premier équipement de télécommunications 1" qui est un téléphone fixe standard comportant un port infrarouge l"₁, ledit téléphone fixe 1" comprenant une mémoire M" contenue de préférence dans une carte électronique programmable 1"a d'un type analogue à une carte SIM de téléphone mobile, laquelle carte est reliée au port infrarouge l"₁,
- un second équipement de télécommunications 2" qui est un téléphone mobile standard, par exemple de type GSM, ledit téléphone comportant un port infrarouge l"₂ et un module électronique d'authentification S" (ex :carte SIM) d'un abonné A" à un réseau mobile, utilisateur de ce téléphone, ladite carte SIM étant reliée au port infrarouge l"₂,
- et un moyen de transfert d'information 3" qui est une liaison infrarouge entre les deux ports l"₁ et l"₂.

Afin que le téléphone mobile 2" et le téléphone fixe 1" puisse échanger des données par n'importe quel canal du type infrarouge, Bluetooth ou GPRS, la carte SIM S" du téléphone mobile 2" est affectée d'une norme, en particulier la norme 31.111, tandis que la carte électronique 1"a contient un programme adéquat (application Java par exemple).

Dans l'exemple représenté, la carte SIM S" du téléphone mobile 2" offre une interface d'accès 2"b à un fichier de données 2"c comportant notamment un sous-fichier RT" de données d'accès à une personne ou un service, tel qu'en particulier un répertoire téléphonique classique.

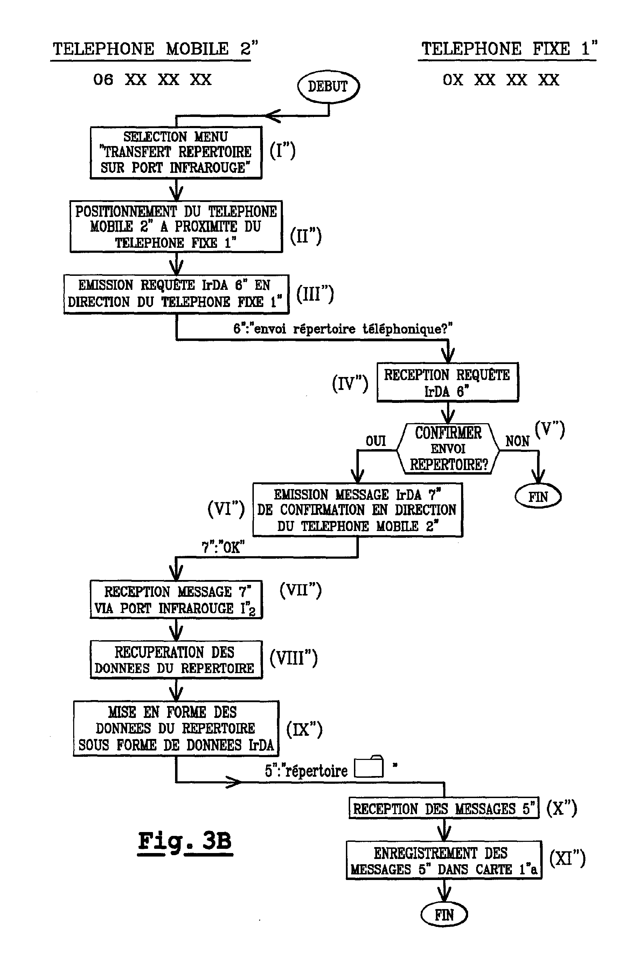

On va maintenant décrire, en référence aux figures 3A et 3B, le fonctionnement du système décrit ci-dessus.

L'utilisateur A" sélectionne sur le téléphone mobile 2" le menu intitulé « transfert de répertoire sur port infrarouge» (étape I"). Un tel menu a été programmé préalablement dans la carte SIM S" du téléphone mobile 2".

Suite à cette sélection, un message « positionnez votre téléphone devant le port infrarouge du téléphone de votre choix » s'affiche à l'écran.

Dès que la présence du téléphone mobile 2" à proximité du téléphone fixe 1" est détectée via le port infrarouge l"₁ (étape Il"), une requête 6", émise par le téléphone mobile 2", s'affiche sur l'écran du téléphone fixe 1", ladite requête demandant à l'utilisateur B" s'il souhaite télécharger un répertoire sur le téléphone fixe 1" (étape III").

Dans l'exemple représenté, ladite requête se présente sous la forme d'un message 6" conforme au standard IrDA (Infrared Data Association), intitulé par exemple : « envoi répertoire téléphonique ? ». Une telle requête 6" contient, de façon connue en tant que telle, le numéro d'identification MSISDN de l'utilisateur A".

La requête 6" est reçue (étape IV") via le port infrarouge l"₁ du téléphone fixe 1".

Suite à l'affichage à l'écran du message 6", l'utilisateur B" choisit de télécharger ou non ce répertoire (étape V").

Dans le cas où le téléchargement du répertoire sur le téléphone fixe 1" n'est pas souhaité, l'utilisateur B" efface simplement le message 6" et le procédé de transfert n'a pas lieu.

Dans le cas où le téléchargement du répertoire sur le téléphone fixe 1" est souhaité, l'utilisateur B" envoie un message 7" à l'utilisateur A" lui confirmant le téléchargement du répertoire (étape VI").

Dans l'exemple représenté, le message 7" est un message IrDA émis via le port l"₁, ledit message étant intitulé par exemple : « OK ».

Une tel message 7" contient, de façon connue en tant que telle, un numéro d'identification de l'utilisateur B".

Le message 7" est reçu (étape VII") via le port l"₂ du téléphone mobile 2".

La carte SIM S" récupère alors les données du sous-fichier répertoire RT", par l'intermédiaire de l'interface d'accès 2"b (étape VIII").

La carte SIM S" procède ensuite à une mise en forme des données du répertoire sous forme de données IrDA, par exemple de type vCard (protocole OBEX) (étape IX").

La carte SIM S" envoie au téléphone fixe 1", via le port infrarouge l"₂, une pluralité de messages IrDA 5" contenant les données du répertoire.

Les messages IrDA 5" sont reçus successivement dans le téléphone fixe 1" (étape X"), via le port infrarouge l"₁.

La carte électronique 1"a décode les messages IrDA 5" au fur et à mesure de leur arrivée pour extraire de ces messages les données du répertoire et aller stocker ces dernières dans la mémoire M" de la carte 1"a (étape XI"). Les données déjà existantes en mémoire sont alors écrasées.

Il convient de noter que dans les trois modes de réalisation décrits ci-dessus, le serveur 2 ou les téléphones mobiles 2' et 2" peuvent comporter chacun une fonctionnalité qui leur permet, lors du transfert du répertoire, de limiter volontairement le nombre de données échangées en sélectionnant une zone « alphabétique » du répertoire et de transférer uniquement cette zone respectivement au téléphone mobile 1 ou aux téléphones fixes 1' et 1".

Le système de transfert selon l'invention doit, en outre, être conçu pour gérer par des menus adaptés et des algorithmes décisionnels :
- la taille du répertoire à transférer (comparer la taille du répertoire à transférer à la place disponible dans la mémoire du terminal cible 1, 1' ou 1"),
- l'élimination des doublons (numéros de téléphone),
- et l'adoption de solutions alternatives compatibles avec la capacité de stockage :
   - de la mémoire M du téléphone mobile 1,
   - de la mémoire M' du téléphone fixe 1',
   - et de la mémoire M" du téléphone fixe 1".
dans le cas où le répertoire à transférer aurait une taille trop importante pour pouvoir être stocké dans de telles mémoires.

On pourra par exemple envisager des scénarios de reprise après « nettoyage » de la mémoire M (respectivement M' et M") par l'utilisateur B (respectivement B' et B") ou de transfert partiel jusqu'à mémoire pleine sur le terminal cible 1, 1' ou 1", ou encore proposer un écrasement pur et simple du répertoire comme décrit dans les modes de réalisation ci-dessus.

Il va de soi que les trois modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

C'est ainsi que le serveur 2, ainsi que les téléphones mobiles 2' et 2", pourraient comporter plusieurs répertoires au lieu d'un seul. Chacun de ces répertoires pourraient alors être rendus accessibles de façon sécurisée, à l'aide notamment d'un code d'accès ou d'un mécanisme d'authentification local.

On pourrait également imaginer de stocker le répertoire, non pas sur un serveur 2 ou encore sur un téléphone mobile 2' ou 2", mais sur un autre équipement de télécommunications tel qu'un assistant personnel numérique, un téléphone fixe, ou encore un ordinateur personnel.

Enfin, dans le cas des premier et second modes de réalisation, les différents dialogues entre le premier et le second équipement de télécommunications pourraient être mis en oeuvre autrement que sous forme de messages courts SMS. Ces dialogues pourraient par exemple être mis en oeuvre
- sous le forme de messages se présentant sous le format MMS (Multimedia Messaging Service) dans le cas où le moyen de transfert d'information 3 ou 3' serait un réseau de télécommunications de type GPRS (Général Packet Radio Service) ou UMTS (Universal Mobile Télécommunications Mobile),
- sous la forme de messages se présentant sous format USSD (Unstructured Supplementary Services Data),
- sous la forme de pages WML (Protocole WAP) dans le cas où au moins l'un des équipements de télécommunications serait un téléphone mobile WAP.

## Revendications

1. Système de transfert d'informations comprenant :
- un premier équipement de télécommunications (1;1';1") qui comprend des moyens de stockage de données (M ; M' ; M"),
- un second équipement de télécommunications (2 ;2' ;2") qui contient au moins un répertoire d'au moins une donnée d'accès à une personne ou un service et qui est relié au premier équipement de télécommunications (1 ;1' ;1") par un moyen de transfert d'informations (3,3a ; 3'M,3'a,3'F,3'b,P' ; 3", l"₁, l"₂), de telle sorte que ledit répertoire de données soit susceptible d'être transféré sur le premier équipement de télécommunications,
ledit système étant **caractérisé en ce que** le second équipement de télécommunications (2 ;2' ;2") comprend :
• des moyens de traitement (2a, 2b ; S', 2'b; S", 2"b) d'au moins une requête (4 ;7' ;7") émise en provenance du premier équipement de télécommunications (1, 1', 1"), par l'intermédiaire dudit moyen de transfert d'informations, ladite requête consistant en une demande de transfert dudit répertoire sur le premier équipement de télécommunications (1;1';1"),
• des moyens de gestion de données (2c ;2'c ;2"c) contenant au moins le répertoire demandé et reliés auxdits moyens de traitement (2a, 2b ; S', 2'b ; S", 2"b), de telle sorte que suite à la réception de ladite requête dans les moyens de traitement, ces derniers extraient des moyens de gestion de données (2c ;2'c ;2"c) le répertoire demandé et transforme ce dernier en une suite de messages (5 ;5' ;5") aptes à être envoyés au premier équipement de télécommunications (1 ;1' ;1") par l'intermédiaire dudit moyen de transfert d'informations, les données du répertoire contenues dans les messages reçus en provenance du second équipement de télécommunications étant alors enregistrées dans les moyens de stockage de données (M ;M' ;M").

2. Système selon la revendication 1, dans lequel lesdits moyens de stockage de données sont contenus dans un module électronique d'authentification (1a ;1'a ;1"a) d'un utilisateur du premier équipement de télécommunications (1 ;1' ;1").

3. Système selon la revendication 1 ou 2, dans lequel le second équipement de télécommunications (2'; 2") comprend en outre des moyens d'émission (S' ;S") d'une requête en direction du premier équipement de télécommunications (1', 1"), par l'intermédiaire du moyen de transfert d'informations, ladite requête (6'; 6") consistant en une proposition de transfert dudit répertoire sur le premier équipement de télécommunications (1' ;1").

4. Système selon l'une quelconque des revendications 1 à 3, dans lequel ladite donnée d'accès du répertoire est choisie dans le groupe comprenant un numéro de téléphone, une adresse postale, une adresse de messagerie électronique, une adresse URL.

5. Système selon l'une quelconque des revendications 1 à 4, dans lequel les premier (1;1';1") et second (2 ;2' ;2") équipements de télécommunications sont choisis dans le groupe comprenant les téléphones mobiles, les téléphones fixes, les assistants personnels numériques, les ordinateurs personnels, et les serveurs.

6. Système selon la revendication 5, dans lequel lorsque le second équipement de télécommunications est un serveur (2), lesdits moyens de traitement (2a, 2b) de requête comprennent un serveur d'applications (2b).

7. Système selon la revendication 5, dans lequel lorsque le second équipement de télécommunications est un téléphone mobile (2' ;2"), lesdits moyens de traitement de requête comprennent un module électronique d'authentification (S' ; S") d'un utilisateur dudit téléphone mobile.

8. Système selon la revendication 1, dans lequel le moyen de transfert est choisi dans le groupe comprenant un réseau de télécommunications mobile, mobile et fixe, et Internet.

9. Système selon la revendication 8, dans lequel une requête (4 ; 6') ou un message (5 ; 5', 7') est du type SMS.

10. Système selon la revendication 1, dans lequel le moyen de transfert est une liaison infrarouge.

11. Système selon la revendication 10, dans lequel une requête (6") ou un message (5", 7") est du type IrDA.

12. Procédé de transfert d'un répertoire d'au moins une donnée d'accès à une personne ou un service dans un premier équipement de télécommunications (1 ;1' ;1") comprenant des moyens de stockage de données (M ;M' ;M"), ledit répertoire étant contenu dans un second équipement de télécommunications (2 ;2' ;2") qui est relié au premier équipement de télécommunications par un moyen de transfert d'informations (3,3a ; 3'M,3'a,3'F,3'b,P' ; 3", l"₁, l"₂), ledit procédé étant **caractérisé en ce qu'**il comprend au moins les étapes suivantes :
- a) le premier équipement de télécommunications (1 ;1', 1") envoie, par l'intermédiaire dudit moyen de transfert d'informations, une requête (4 ; 7' ;7") au second équipement de télécommunications (2 ;2' ;2") selon laquelle est demandé un transfert du répertoire,
- b) suite à la réception de cette requête, des moyens de traitement contenus dans le second équipement de télécommunications (2 ;2' ;2") extraient le répertoire demandé à partir de moyens de gestion de données (2c ;2'c ;2"c) contenus dans le second équipement de télécommunications, et transforment ce répertoire en une suite de messages (5 ;5' ;5") aptes à être envoyés au premier équipement de télécommunications (1 ;1' ;1") par l'intermédiaire dudit moyen de transfert d'informations,
- c) le second équipement de télécommunications (2 ;2' ;2") envoie lesdits messages en direction du premier équipement de télécommunications (1 ;1' ;1"),
- d) ledit premier équipement de télécommunications (1 ;1' ;1") enregistre, dans les moyens de stockage de données (M ;M' ;M"), les données du répertoire contenues dans les messages reçus.

13. Procédé selon la revendication 12, selon lequel, préalablement à l'étape a), le second équipement de télécommunications (2' ;2") envoie en direction dudit premier équipement de télécommunications (1' ;1"), par l'intermédiaire dudit moyen de transfert d'informations, une requête (6' ;6") selon laquelle est proposé un transfert dudit répertoire sur ledit premier équipement de télécommunications.

14. Procédé selon la revendication 12 ou 13, selon lequel ladite donnée d'accès du répertoire est choisie dans le groupe comprenant un numéro de téléphone, une adresse postale, une adresse de messagerie électronique, une adresse URL.

15. Procédé selon l'une quelconque des revendications 12 à 14, selon lequel le moyen de transfert est choisi dans le groupe comprenant un réseau de télécommunications mobile, mobile et fixe, et Internet.

16. Procédé selon la revendication 15, selon lequel une requête (4 ; 6') ou un message (5 ; 5', 7') est du type SMS.

17. Procédé selon l'une quelconque des revendications 12 à 14, selon lequel le moyen de transfert est une liaison infrarouge.

18. Procédé selon la revendication 17, selon lequel une requête (6") ou un message (5", 7") est du type IrDA.
